# EUROPÄISCHE PATENTANMELDUNG

(11) **EP 3 716 019 A1**
(43) Veröffentlichungstag der Anmeldung: **30.09.2020**
(21) Anmeldenummer: 20163727.9
(22) Anmeldetag: 17.03.2020
(51) Int. Cl.: G06F 3/01

(54) **VERFAHREN ZUR ERKENNUNG EINER BEDIENABSICHT AN EINER VON HAND BETÄTIGBAREN BEDIENEINHEIT**

(30) Priorität: 29.03.2019 DE 102019204481
(71) Anmelder: Deere & Company, Moline, IL 61265 (US)
(72) Erfinder: Wagner, Christoph, 68163 Mannheim (DE); Hermann, Peter, 68163 Mannheim (DE)
(74) Vertreter: Dehnhardt, Florian Christopher

(57) **Zusammenfassung**

System (14) zur Erkennung einer Bedienabsicht an einer von Hand betätigbaren Bedieneinheit (18, 24), umfassend eine Bilderfassungseinheit (30), die einen die Bedieneinheit (18, 24) umgebenden Erfassungsbereich (32, 34) im Hinblick auf eine eintretende Hand (36) überwacht, um diese hinsichtlich der Positionierung einer Handfläche und/oder einer oder mehrerer Finger in Bezug auf die Bedieneinheit (18, 24) zu erfassen und eine entsprechende Bildinformation zu erzeugen, wobei eine Bewertungseinheit (38) die erzeugte Bildinformation mit wenigstens einem für eine Bedienabsicht charakteristischen Bildmuster aus einem Musterspeicher (46) vergleicht und im Falle einer innerhalb eines zugelassenen Variationsbereichs liegenden Übereinstimmung eine seitens der Bedieneinheit (18, 24) steuerbare Funktion freigibt.

## Beschreibung

Die Erfindung betrifft ein System zur Erkennung einer Bedienabsicht an einer von Hand betätigbaren Bedieneinheit.

Ein derartiges System mit einem gegenüber unbeabsichtigten Betätigungen gesicherten Joystick für ein landwirtschaftliches Fahrzeug geht beispielsweise aus der US 6 948 398 B2 hervor. Der zur Bedienung diverser Maschinen- und/oder Gerätefunktionen des landwirtschaftlichen Nutzfahrzeugs oder eines daran befindlichen Anbaugeräts vorgesehene Joystick weist erste und zweite Sensorzonen zur kapazitiven Berührungserkennung auf. Die von den Sensorzonen bereitgestellten Sensorsignale werden mittels einer nachgeschalteten UND-Logik derart miteinander verknüpft, dass eine Bedienung der Maschinen- und/oder Gerätefunktionen durch Betätigung des Joysticks ausschließlich bei gleichzeitiger Berührung beider Sensorzonen freigegeben wird. Hierzu hat die Bedienperson den Joystick mit der Hand in einer vorgegebenen, mit der Lage der beiden Sensorzonen korrespondierenden Haltung zu umgreifen.

Der Bauraumbedarf der flächig ausgebildeten Sensorzonen führt dazu, dass der Gestaltungsfreiheit bei der Formgebung des Bedienhebels gewisse Grenzen gesetzt sind. Auch sind die Sensorzonen für einen Einsatz mit fingerbetätigten, mithin entsprechend kleinformatigen Bedienelementen denkbar ungeeignet.

Es ist daher Aufgabe der vorliegenden Erfindung, ein System der eingangs genannten Art dahingehend weiterzubilden, dass dieses in Verbindung mit Bedieneinheiten beliebiger Bauart verwendbar ist.

Diese Aufgabe wird durch ein System mit den Merkmalen des Patentanspruchs 1 gelöst.

Das erfindungsgemäße System zur Erkennung einer Bedienabsicht an einer von Hand betätigbaren Bedieneinheit umfasst eine Bilderfassungseinheit, die einen die Bedieneinheit umgebenden Erfassungsbereich im Hinblick auf eine eintretende Hand überwacht, um diese hinsichtlich der Positionierung einer Handfläche und/oder einer oder mehrerer Finger in Bezug auf die Bedieneinheit zu erfassen und eine entsprechende Bildinformation zu erzeugen, wobei eine Bewertungseinheit die erzeugte Bildinformation mit wenigstens einem für eine Bedienabsicht charakteristischen Bildmuster aus einem Musterspeicher vergleicht und im Falle einer innerhalb eines zugelassenen Variationsbereichs liegenden Übereinstimmung eine seitens der Bedieneinheit steuerbare Funktion freigibt.

Da die Mittel zur Erkennung der Bedienabsicht von der zu überwachenden Bedieneinheit gänzlich unabhängig ausgestaltet sind, ist es möglich, das erfindungsgemäße System in Verbindung mit Bedieneinheiten beliebiger Bauart zu verwenden.

Die im Musterspeicher hinterlegten Bildmuster können beispielsweise mittels eines "Deep Learning"-Ansatzes gewonnen werden. In einem solchen Fall erfolgt in einem Einlernvorgang zunächst eine händische Bewertung bzw. Kategorisierung aller denkbaren Hand- und Fingerstellungen hinsichtlich einer unbeabsichtigten bzw. beabsichtigten Betätigung der betreffenden Bedieneinheit. Diese definieren letztlich den für die Zuerkennung einer Bedienabsicht zugelassenen Variationsbereich der Bildinformationen. Die solchermaßen bewerteten bzw. kategorisierten Bildmuster werden anschließend in den Musterspeicher hochgeladen.

Vorteilhafte Weiterbildungen des erfindungsgemäßen Systems gehen aus den Unteransprüchen hervor.

Um eine räumliche Positionierung der Handfläche bzw. einzelner oder mehrerer Finger in Bezug auf die Bedieneinheit sicher beurteilen zu können, ist es von Vorteil, wenn die von der Bilderfassungseinheit erzeugte Bildinformation ein dreidimensionales Abbild der erfassten Hand beinhaltet.

Hierbei kann die Bilderfassungseinheit zur Erzeugung der Bildinformationen eine Stereokamera aufweisen. Die Stereokamera kann sich in einer Fahrerkabine eines mit dem erfindungsgemäßen System ausgestatteten Fahrzeugs befinden und dort in einem Dachhimmel oder anderen zur Bedieneinheit benachbart angeordneten Innenverkleidungsteilen eingebaut sein.

Typischerweise ist die Bedieneinheit als ein im Erfassungsbereich der Bilderfassungseinheit liegender Bedienhebel in Gestalt eines Joysticks und/oder ein im Erfassungsbereich der Bilderfassungseinheit liegendes Bedienelementfeld, das aus einer Vielzahl einzelner Bedienelemente bestehen kann, ausgebildet.

Bei der freigegebenen Funktion handelt es sich insbesondere um eine Betriebs- und/oder Arbeitsfunktion eines geländegängigen Nutzfahrzeugs und/oder eines daran angebrachten Arbeitsgeräts. Denkbar ist unter anderem die Verwendung des erfindungsgemäßen Systems in einem landwirtschaftlichen Traktor mit einem daran angebrachten Frontlader, wobei letzterer über einen als Joystick ausgebildeten Bedienhebel manuell steuerbar ist. Das erfindungsgemäße System unterbindet hierbei unerwünschte Frontladerbewegungen, wie sie aufgrund einer unbeabsichtigten Auslenkung des Bedienhebels zustande kommen können. Andererseits kann die Bedieneinheit auch durch ein Kipptastenfeld zur manuellen Steuerung eines im Heckbereich des landwirtschaftlichen Traktors befindlichen Steuerventilblocks gebildet sein, an den sich hydraulische Verbraucher eines an dem landwirtschaftlichen Traktor angebrachten Arbeitsgeräts zur Ausführung zugehöriger Arbeitsfunktionen ansteuern lassen.

Der Vollständigkeit halber sei angemerkt, dass es sich anstelle eines landwirtschaftlichen Traktors auch um eine beliebige andere Landmaschine handeln kann. So ist es unter anderem denkbar, dass es sich um eine Erntemaschine mit einer als Fahrhebel ausgebildeten Bedieneinheit handelt, wobei sich über den Fahrhebel diverse Betriebsfunktionen einer Lenkung bzw. eines Fahrantriebs der Erntemaschine steuern lassen. Ebenso ist eine Verwendung des erfindungsgemäßen Systems nicht auf den Landwirtschaftsbereich beschränkt, vielmehr kann dieses auch im Forst- oder Baumaschinenbereich bzw. bei Gabelstaplern oder (stationären) Ladekränen eingesetzt werden.

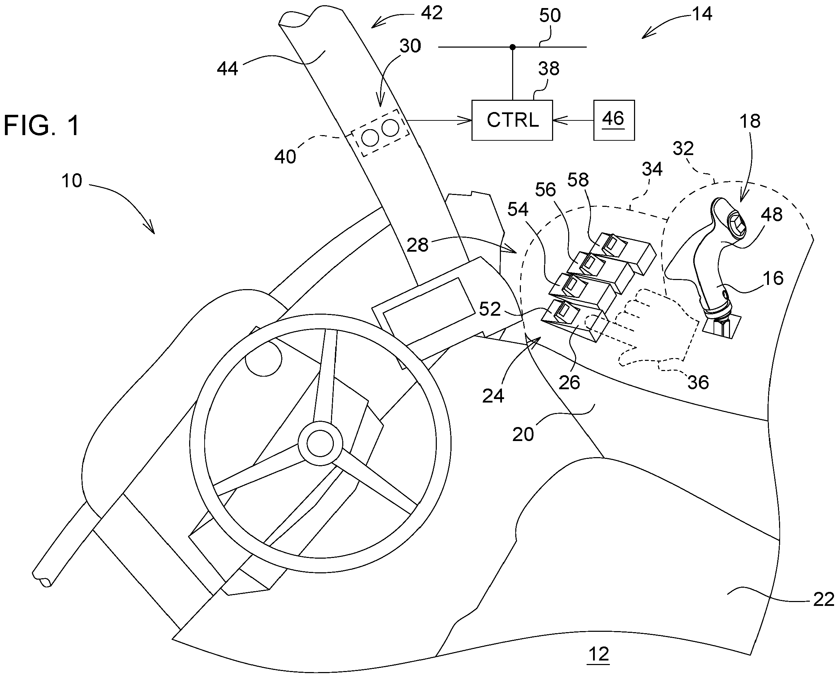

Das erfindungsgemäße System zur Erkennung einer Bedienabsicht an einer von Hand betätigbaren Bedieneinheit wird im Folgenden anhand der beigefügten Zeichnung näher erläutert. Dabei zeigt die einzige Figur ein Ausführungsbeispiel des erfindungsgemäßen Systems in einem als landwirtschaftlicher Traktor ausgebildeten geländegängigen Nutzfahrzeug.

Das in einer Fahrerkabine 10 des landwirtschaftlichen Traktors 12 untergebrachte System 14 umfasst eine als Bedienhebel bzw. Joystick 16 ausgebildete erste Bedieneinheit 18. Die erste Bedieneinheit 18 ist in einer seitlichen Bedienkonsole 20 im Bereich eines Fahrersitzes 22 untergebracht und dient der manuellen Steuerung eines an dem landwirtschaftlichen Traktor 12 angebrachten Frontladers (nicht abgebildet). Eine zweite Bedieneinheit 24 ist durch ein Bedienelementfeld in Form eines Kipptastenfelds 26 zur manuellen Steuerung eines im Heckbereich des landwirtschaftlichen Traktors 12 befindlichen Steuerventilblocks (nicht abgebildet) gebildet, an den sich hydraulische Verbraucher eines an dem landwirtschaftlichen Traktor 12 angebrachten Arbeitsgeräts zur Ausführung zugehöriger Arbeitsfunktionen ansteuern lassen. Die zweite Bedieneinheit 24 ist dabei in einem vorderen Bereich 28 der seitlichen Bedienkonsole 20 angeordnet.

Des Weiteren ist eine Bilderfassungseinheit 30 vorhanden, die einen die erste und zweite Bedieneinheit 18, 24 jeweils umgebenden Erfassungsbereich 32, 34 überwacht. Der Erfassungsbereich 32, 34 ist in der Figur durch eine virtuelle Hülle veranschaulicht, die um die betreffende Bedieneinheit 18, 24 aufgespannt ist.

Erkennt die Bilderfassungseinheit 30 eine in den jeweiligen Erfassungsbereich 32, 34 eintretende Hand 36, so erfasst diese die Hand 36 hinsichtlich der Positionierung der Handfläche und/oder einer oder mehrerer Finger in Bezug auf die jeweilige Bedieneinheit 18, 24, um eine entsprechende Bildinformation zu erzeugen, die anschließend einer mit der Bilderfassungseinheit 30 kommunizierenden Bewertungseinheit 38 zur Auswertung zugeführt wird.

Die von der Bilderfassungseinheit 30 erzeugte Bildinformation beinhaltet hierbei ein dreidimensionales Abbild der erfassten Hand 36. Zur Erzeugung der Bildinformation weist die Bilderfassungseinheit 30 eine Stereokamera 40 auf. Die Stereokamera 40 befindet sich ebenfalls in der Fahrerkabine 10 und ist dort in einem Dachhimmel bzw. einem im Bereich einer A-Säule 42 angeordneten Innenverkleidungsteil 44 eingebaut.

Die Bewertungseinheit 38 vergleicht die erzeugte Bildinformation mit wenigstens einem für eine Bedienabsicht der betreffenden Bedieneinheit 18, 24 charakteristischen Bildmuster aus einem Musterspeicher 46, wobei im Falle einer innerhalb eines zugelassenen Variationsbereichs liegenden Übereinstimmung die seitens der jeweiligen Bedieneinheit 18, 24 steuerbare Funktion über einen zugehörigen CAN-Bus 50 freigegeben wird.

Beispielsgemäß erfolgt im Falle des Bedienhebels bzw. Joysticks 16 eine Freigabe der zugeordneten Frontladerfunktionen dann, wenn sich ein an dem Bedienhebel bzw. Joystick 16 vorgesehenes Griffstück 48 innerhalb der Handfläche befindet sowie die Finger das Griffstück 48 in einer zur Bedienung typischen Art und Weise umgreifen. Im Hinblick auf das Kipptastenfeld 26 hingegen erfolgt eine Freigabe der zugeordneten Arbeitsfunktionen dann, wenn sich ergibt, dass die Handfläche nach unten in Richtung der Bedienkonsole 20 gedreht ist und ein oder mehrere Fingerspitzen sich in der Nähe einer oder mehrerer Kipptasten 52, 54, 56, 58 befinden oder diese berühren.

Die insoweit im Musterspeicher 46 hinterlegten Bildmuster werden mittels eines "Deep Learning"-Ansatzes gewonnen. In einem Einlernvorgang erfolgt zunächst eine händische Bewertung bzw. Kategorisierung aller denkbaren Hand- und Fingerstellungen hinsichtlich einer unbeabsichtigten bzw. beabsichtigten Betätigung der betreffenden Bedieneinheit 18, 24. Diese definieren letztlich den für die Zuerkennung einer Bedienabsicht zugelassenen Variationsbereich der Bildinformationen. Die solchermaßen bewerteten bzw. kategorisierten Bildmuster werden anschließend in den Musterspeicher 46 hochgeladen.

## Patentansprüche

1. System zur Erkennung einer Bedienabsicht an einer von Hand betätigbaren Bedieneinheit, umfassend eine Bilderfassungseinheit (30), die einen die Bedieneinheit (18, 24) umgebenden Erfassungsbereich (32, 34) im Hinblick auf eine eintretende Hand (36) überwacht, um diese hinsichtlich der Positionierung einer Handfläche und/oder einer oder mehrerer Finger in Bezug auf die Bedieneinheit (18, 24) zu erfassen und eine entsprechende Bildinformation zu erzeugen, wobei eine Bewertungseinheit (38) die erzeugte Bildinformation mit wenigstens einem für eine Bedienabsicht charakteristischen Bildmuster aus einem Musterspeicher (46) vergleicht und im Falle einer innerhalb eines zugelassenen Variationsbereichs liegenden Übereinstimmung eine seitens der Bedieneinheit (18, 24) steuerbare Funktion freigibt.

2. Verfahren nach Anspruch 1, **dadurch gekennzeichnet, dass** die von der Bilderfassungseinheit (30) erzeugte Bildinformation ein dreidimensionales Abbild der erfassten Hand (36) beinhaltet.

3. Verfahren nach Anspruch 1 oder 2, **dadurch gekennzeichnet, dass** die Bilderfassungseinheit (30) zur Erzeugung der Bildinformationen eine Stereokamera (40) aufweist.

4. Verfahren nach wenigstens einem der Ansprüche 1 bis 3, **dadurch gekennzeichnet, dass** die Bedieneinheit (18, 24) als ein im Erfassungsbereich (32) der Bilderfassungseinheit (30) liegender Bedienhebel (16) und/oder ein im Erfassungsbereich (34) der Bilderfassungseinheit (30) liegendes Bedienelementfeld (26) ausgebildet ist.

5. Verfahren nach wenigstens einem der Ansprüche 1 bis 4, **dadurch gekennzeichnet, dass** es sich bei der freigegebenen Funktion um eine Betriebs- und/oder Arbeitsfunktion eines geländegängigen Nutzfahrzeugs (10) und/oder eines daran angebrachten Arbeitsgeräts handelt.
